# EUROPÄISCHE PATENTANMELDUNG

(11) **EP 0 937 591 A1**
(43) Veröffentlichungstag der Anmeldung: **25.08.1999**
(21) Anmeldenummer: 99103326.7
(22) Anmeldetag: 19.02.1999
(51) Int. Cl.: B60D 1/38

(54) **Vorrichtung zum Ankuppeln eines Anhängers**

(30) Priorität: 19.02.1998 DE 19807059
(71) Anmelder: Schmid, Manfred, 85551 Kirchheim (DE)
(72) Erfinder: Schmid, Manfred, 85551 Kirchheim (DE)
(74) Vertreter: Kehl, Günther, Dipl.-Phys.

(57) **Zusammenfassung**

Eine Vorrichtung zum Ankuppeln eines Anhängers an eine Anhängerkupplung eines Kraftfahrzeuges weist zwei Seilumlenkeinheiten 1, 2 auf, über die nach Art eines Flaschenzuges ein Seil 3 geführt ist. Die Seilumlenkeinheiten können am Rohr des Zugdeichsel-Stützrades des Anhängers beziehungsweise an der Anhängerkupplung des Kraftfahrzeuges befestigt werden.

Mit der Vorrichtung kann die Kupplungspfanne der Zugdeichsel eines Anhängers präzise und mit vergleichsweise geringem Kraftaufwand über dem Gegenkupplungsstück der Anhängerkupplung positioniert werden.

## Beschreibung

Die Erfindung betrifft eine Vorrichtung zum Ankuppeln eines Anhängers an eine Anhängerkupplung eines Kraftfahrzeuges.

Das Ankuppeln eines Anhängers, wie beispielsweise eines Wohnwagens oder eines Bootshängers, ist oft mit großen Mühen verbunden und erfordert meistens das Zusammenhelfen von mehreren Personen.

Es sind zwar bereits Seilwinden zur Unterstützung des Ankupplungsvorganges bekannt geworden, jedoch sind diese aufwendig und teuer und haben zu dem den Nachteil, daß gerade der letzte Abschnitt des Zusammenführens der beiden Kupplungsteile nicht präzise möglich ist.

Eine Einzelperson kann ohne Seilwinde praktisch den Ankupplungsvorgang nicht bewerkstelligen. Das scheitert bereits daran, daß beim Rückwärtsfahren ohne Einweiser es praktisch unmöglich ist, die beiden zu verbindenden Fahrzeuge so nahe aneinander zu bringen, daß der Anhänger angekuppelt werden kann. Derartige Versuche führen häufig auch zu Havarien, bei denen das Heck des Kraftfahrzeuges durch die Zugdeichsel des Anhängers beschädigt wird.

Der Erfindung liegt die Aufgabe zugrunde, eine Vorrichtung zum Ankuppeln eines Anhängers an eine Anhängerkupplung des Kraftfahrzeuges zu schaffen, die klein baut, kostengünstig herzustellen ist, keiner Wartung bedarf und die ein präzises Heranführen der Zugdeichsel des Anhängers an die Anhängerkupplung des Kraftfahrzeuges unter vergleichsweise geringem Kraftaufwand ermöglicht.

Diese Aufgabe ist bei einer Vorrichtung der eingangs genannten Art erfindungsgemäß gelöst durch zwei Seilumlenkeinheiten, über die ein Seil nach Art eines Flaschenzuges geführt ist, wobei die erste Seilumlenkeinheit Mittel zur Befestigung an dem Rohr des Zugdeichsel-Stützrades eines Anhängers und die zweite Seilumlenkeinheit Mittel zur Befestigung an der Anhängerkupplung des Kraftfahrzeuges aufweist und eines der beiden Enden des Seils mit einem Zugriff versehen ist.

Mit der erfindungsgemäßen Vorrichtung wird überraschenderweise erreicht, daß die Kupplungspfanne der Zugdeichsel des Anhängers aus einer Entfernung von ca. einem halben Meter ohne großen Kraftaufwand präzise über die Anhängerkupplung des Kraftfahrzeuges geführt und dort eingerastet werden kann. Es hat sich gezeigt, daß die Kraftverstärkung des Flaschenzuges ausreichend ist, daß von einer Person ein schwerer Wohnwagen zur Anhängerkupplung des Kraftfahrzeuges gezogen werden kann.

Nach einer vorteilhaften Ausgestaltung der Erfindung ist die erste Seilumlenkeinheit zur Befestigung an dem Rohr des Zugdeichsel-Stützrades U-förmig so ausgebildet, daß sie reibschlüssig auf das Rohr des Zugdeichsel-Stützrades aufsteckbar ist. Hierdurch wird die Bedienerfreundlichkeit wesentlich erhöht, da auch dann, wenn auf den Seilen zwischen den beiden Umlenkeinheiten noch kein Zug ist, die Seilumlenkeinheit in der Position bleibt, an der sie einmal befestigt worden ist. Darüber hinaus hat die U-förmige Ausbildung der Seilumlenkeinheit den Vorteil, daß selbst dann, wenn die Zugdeichsel mit ihrer an ihrem Ende befestigten Kupplungspfanne nur wenig über das Rohr des Zugdeichsel-Stützrades übersteht, die beiden zu verbindenden Fahrzeuge durch den Flaschenzug so nahe aneinandergebracht werden können, daß die Kupplungspfanne der Zugdeichsel unmittelbar über die Anhängerkupplung gelangt, wo sie einrasten kann.

In diesem Zusammenhang hat sich eine Ausführungsform besonders bewährt, bei der die U-Form der ersten Seilumlenkeinheit leicht hinterschnitten und die Seilumlenkeinheit elastisch verformbar ist, so daß beim Aufstecken der Seilumlenkeinheit die beiden Schenkel der U-Form etwas auseinandergedrückt und bei dem vollständigen Aufstecken wieder zusammenschnappen, um so eine sichere Verbindung zwischen dem Rohr des Zugdeichsel-Stützrades und der ersten Seilumlenkeinheit zu gewährleisten.

Vorzugsweise weist die erste Seilumlenkeinheit ein geschlossenes U-förmiges Gehäuse auf, in dem mindestens eine Seilumlenkrolle angeordnet ist.

Anstelle von Rollen können jedoch auch Gleitführungen für das Seil vorgesehen sein. Eine so gebaute Vorrichtung ist kostengünstig herzustellen, da die Herstellung der Rollen und ihrer Lager entfällt, allerdings ist die Reibung bei einer Gleitführung erhöht, weswegen ein größerer Kraftaufwand bei der Betätigung der Vorrichtung erforderlich ist. Im einfachsten Fall kann die erste Seilumlenkeinheit bei dieser Ausführungsform aus einer über das Rohr des Zugdeichsel-Stützrades zu klipsenden Hülse bestehen, in der an das Seil angepaßte Führungsnuten vorgesehen sind. Es sollte jedoch darauf geachtet werden, daß die Materialien des Seils und der Hülse einen möglichst geringen Reibkoeffizienten aufweisen.

Nach einer vorteilhaften Ausgestaltung der Erfindung ist vorgesehen, daß die zweite Seilumlenkeinheit einen Haken zur Befestigung an der Anhängerkupplung des Kraftfahrzeuges aufweist. Ein derartiger Haken kann an praktisch jeder Anhängerkupplung befestigt werden und behält seine Position auch bei lockerem Zugseil bei. Entscheidend ist, daß er das Zusammenführen des Kupplungskopfes des Kraftfahrzeuges und der Kupplungspfanne des Anhängers nicht stört und daß er auch nach der Vollendung des Ankupplungsvorganges leicht entfernt werden kann.

Nach einer besonders vorteilhaften Weiterbildung der Erfindung ist vorgesehen, daß das andere der beiden Enden des Seiles an einer der beiden Seilumlenkeinheiten lösbar befestigt ist. Hierdurch wird erreicht, daß der Flaschenzug gewissermaßen geöffnet werden kann, um die Seilumlenkeinheiten an den zu verbindenden Teilen zu befestigen.

Wenn alternativ oder ergänzend hierzu eine Umlenkrolle freistehend ausgebildet ist, d.h. so ausgebildet ist, daß eine Seilschleife nach Belieben über die freistehende Umlenkrolle geführt oder von dieser entfernt werden kann, wird das Öffnen des Flaschenzug es besonders einfach. Der Benutzer hat zudem die Möglichkeit, je nach den Gegebenheiten des Einzelfalles die freistehende Umlenkrolle zu benutzen oder nicht. Wird die freistehende Umlenkrolle benutzt, wird der Kraftaufwand weiter reduziert, während jedoch das Seil über eine längere Wegstrecke gezogen werden muß. Wird die Umlenkrolle nicht benutzt, ist der Kraftaufwand größer, jedoch muß das Seil über eine geringere Wegstrecke gezogen werden. Auf diese Weise kann gewissermaßen das Kraftverstärkungsverhältnis des Flaschenzuges an die vorgegebenen Bedingungen angepaßt werden.

Weitere vorteilhafte Ausführungsformen und Vorteile der Erfindung sind den Unteransprüchen und der nachfolgenden Beschreibung zu entnehmen.

Die Erfindung wird im folgenden an Hand eines in den Zeichnungen schematisch dargestellten Ausführungsbeispieles näher erläutert. Es zeigt:
- Figur 1:: Eine Vorrichtung gemäß der Erfindung in der Draufsicht.
- Figur 2:: Einen Schnitt längs der Schnittlinie II-II in Figur 1.

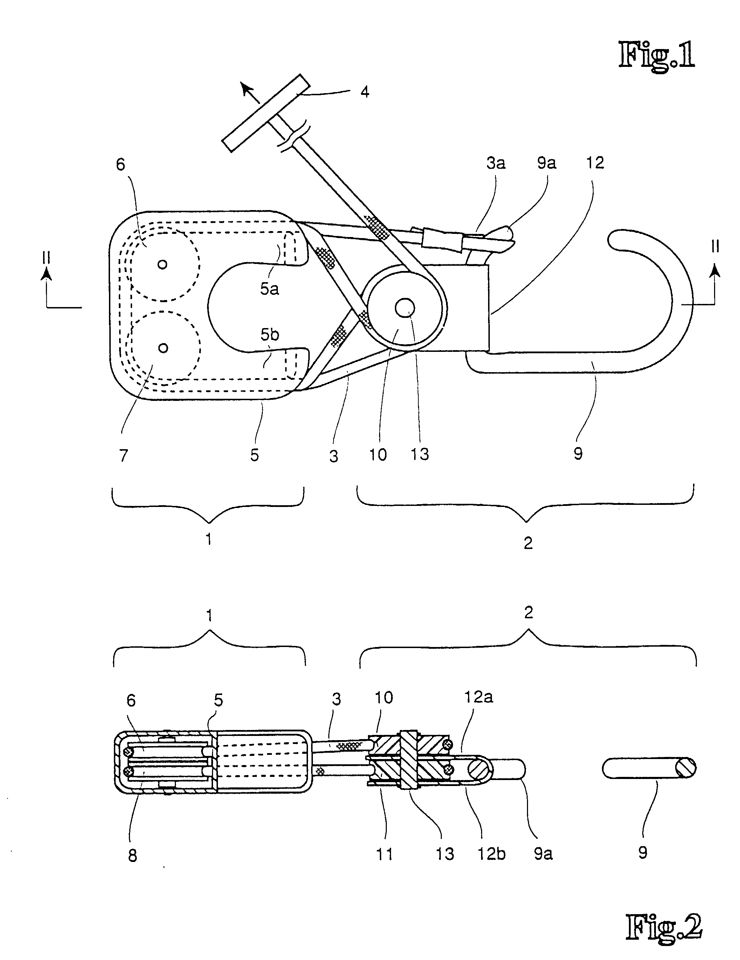

Wie aus Figur 1 zu entnehmen ist, umfaßt die Vorrichtung zum Ankuppeln eines Anhängers an eine Anhängerkupplung eines Kraftfahrzeuges zwei Seilumlenkeinheiten 1 und 2. Die erste Seilumlenkeinheit 1 weist ein in der Draufsicht etwa U-förmiges Gehäuse 5 auf, in dem insgesamt zwei Paare von Umlenkrollen angeordnet sind. Die beiden in der Ansicht der Figur 1 oben liegenden Umlenkrollen sind durch die Bezugszeichen 6 und 7 gekennzeichnet. Die insgesamt vier Umlenkrollen sind in dem Gehäuse drehbar gelagert, so daß jede einzelne Rolle unabhängig von den anderen Rollen frei drehbar ist. Über die vier Umlenkrollen der Seilumlenkeinheit 1 können zwei Seilabschnitte unabhängig voneinander geführt werden.

Die U-Form des Gehäuses ist leicht hinterschnitten, d.h. der Abstand zwischen den beiden freien Enden der Schenkel 5a und 5b des U-förmigen Gehäuses 5 ist etwas geringer als ihr Abstand im Bereich des Zentrums des Gehäuses. Auf diese Weise kann das Gehäuse 1 unter leichter elastischer Verformung der beiden Schenkel 5a und 5b über das Rohr des Zugdeichsel-Stützrades der Zugdeichsel eines Anhängers geschoben werden, wo es einschnappt und einen sicheren Halt findet.

Die zweite Seilumlenkeinheit 2 umfaßt ein Gehäuse 12 aus zwei parallelen Platten 12a und 12b, die mit einer Transversalbohrung versehen sind, in der eine Achse 13 befestigt ist. Auf der Achse 13 sind zwei Umlenkrollen gelagert, von denen in der Darstellung der Figur 1 nur die obere, nämlich die Umlenkrolle 10 zu erkennen ist. In das Gehäuse 12 greift ein Haken 9 ein, der eine ausreichende Größe aufweist, um das Rohr einer üblichen Anhängerkupplung eines Kraftfahrzeuges zu umschließen. Ein Endstück des Hakens 9 steht über das Gehäuse 12 vor und bildet einen Hakenansatz 9a, der die Möglichkeit bietet, dort eine Endschlaufe 3a eines Seiles 3 einzuhängen.

Wie aus der Darstellung der Figur 1 hervorgeht, läuft das Seil 3, das mit seiner Endschlaufe 3a an dem Hakenansatz 9a eingehängt ist, von der Seilumlenkeinheit 2 zur Seilumlenkeinheit 1, wo es über den Schenkel 5a des Gehäuses 5 in dieses eintritt und über die unter den Umlenkrollen 6 und 7 liegenden Umlenkrollen geführt ist. Von der Seilumlenkeinheit 1 wird das über den Schenkel 5b austretende Seil 3 zurück zur Seilumlenkeinheit 2 geführt, wo es durch die unter der Umlenkrolle 10 liegende Umlenkrolle erneut umgelenkt und wiederum zurück zur Seilumlenkeinheit 1 geführt wird. Dort läuft es nunmehr über die oberen, d.h. in der Darstellung der Zeichnung oben liegenden Umlenkrollen 6 und 7 und tritt an dem Schenkel 5a aus dem Gehäuse 5 aus, worauf es erneut zur Seilumlenkeinheit 2 zurückgeleitet wird. Bei der Seilumlenkeinheit 2 wird es über die freistehende, d.h. außerhalb des Gehäuses 12 angeordnete Rolle 10 erneut umgelenkt. An seinem freien Ende ist ein Zuggriff 4 angeordnet.

In Figur 2 ist die Vorrichtung im Längsschnitt gezeigt. Es ist das Gehäuse 5 mit den frei drehbar gelagerten Umlenkrollen 6 und 8 zu erkennen.

Figur 2 zeigt besonders deutlich die Ausgestaltung des Gehäuses 12 der zweiten Seilumlenkeinheit 2, das aus zwei parallelen an einer Seite miteinander verbundenen Platten 12a und 12b besteht. In einer Transversalbohrung des Gehäuses 12 sitzt die Achse 13, die zwei frei drehbare Umlenkrollen 10 und 11 trägt. Die Umlenkrolle 11 ist in dem Gehäuse 12 eingeschlossen, während die Umlenkrolle 10 freistehend ausgebildet ist. Die beiden Seilumlenkeinheiten 1 und 2 sind durch das Seil 3 verbunden. Figur 2 zeigt weiterhin, wie der Haken 9 in dem Gehäuse 12 der Seilumlenkeinheit 2 befestigt ist.

Die Vorrichtung wird wie folgt zum Ankuppeln eines Anhängers an die Anhängerkupplung des Kraftfahrzeuges eingesetzt:

Die Seilschlaufe 3a wird von dem Hakenansatz 9a abgenommen und der mit dem Zuggriff 4 verbundene Endabschnitt des Seils 3 wird von der freistehenden Umlenkrolle 10 abgenommen, so daß der Flaschenzug gewissermaßen "geöffnet" ist. Das Kraftfahrzeug wird mit seiner Anhängerkupplung auf ca. einen halben Meter an die Zugdeichsel des Anhängers herangefahren. Da der Flaschenzug in dem oben beschriebenen Sinne geöffnet ist, kann das Gehäuse 5 mit seinen beiden Schenkeln 5a und 5b auf das Rohr des Zugdeichsel-Stützrades so aufgesteckt werden, daß die beiden freien Enden der Schenkel 5a und 5b des Gehäuses 5 in Richtung zu der Anhängerkupplung des Kraftfahrzeuges weisen. Der Haken 9 wird zu der Anhängerkupplung des Kraftfahrzeuges geführt und unterhalb des Kugelkopfes der Anhängerkupplung eingehängt. Nunmehr wird die Endschlaufe 3a an dem Hakenansatz 9a eingehängt und das zum Traggriff 4 führende Seilende über die freistehende Umlenkrolle 10 gelegt.

Durch Ziehen an dem Zuggriff 4 werden die Umlenkeinheiten 1 und 2 und somit die mit diesen verbundenen Kupplungsteile zueinander gezogen, bis die Gelenkpfanne der Zugdeicnsel des Anhängers direkt über dem Kupplungskopf der Anhängerkupplung des Kraftfahrzeuges liegt. Wenn während des Zusammenziehens des Flaschenzuges sich das Seil 3 lockert, beispielsweise weil der Anhänger in eine Bodenmulde rollt, verbleiben die Seilumlenkeinheiten in ihren Befestigungspositionen. Insbesondere die Seilumlenkeinheit 1 ist stabil an dem Rohr des Zugdeichsel-Stützrades festgeklemmt. Nach Erreichen der Endposition wird durch Eindrehen des Stützrades die Anhängerdeichsel abgesenkt, bis die Gelenkkupplungspfanne über der Anhängerkupplung einrastet. Da die Seilumlenkeinheit 1 unterhalb der Zugdeichsel an dem Rohr des Zugdeichsel-Stützrades befestigt wird, stört die Vorrichtung das Zusammenführen der beiden Kupplungsteile in keiner Weise. Die Vorrichtung kann nach dem Herstellen der Kupplungsverbindung in einfacher Weise gelöst werden, wozu das Seil 3 von der freistehenden Rolle 10 abgenommen und die Endschlaufe 3a von dem Hakenansatz 9a entfernt werden muß. Danach kann der Haken 9 ausgehängt und die Seilumlenkeinheit 1 vom Rohr des Zugdeichsel-Stützrades abgezogen werden.

Gemäß einer weiteren nicht in den Zeichnungen gezeigten Ausführungsform besteht die Seilumlenkeinheit 1 aus einer auf das Rohr des Zugdeichsel-Stützrades aufsetzbaren Hülse, in der Führungsnuten zur gleitenden Führung des Seiles vorgesehen sind.

## Patentansprüche

1. Vorrichtung zum Ankuppeln eines Anhängers an eine Anhängerkupplung eines Kraftfahrzeugs, **gekennzeichnet** durch zwei Seilumlenkeinheiten (1, 2), über die ein Seil (3) nach Art eines Flaschenzuges geführt ist, wobei die erste Seilumlenkeinheit (1) Mittel zur Befestigung an dem Rohr des Zugdeichsel-Stützrades des Anhängers und die zweite Seilumlenkeinheit (2) Mittel zur Befestigung an der Anhängerkupplung des Kraftfahrzeugs aufweist und eines der beiden Enden des Seiles (3) mit einem Zuggriff (4) versehen ist.

2. Vorrichtung nach Anspruch 1, dadurch gekennzeichnet, daß die erste Seilumlenkeinheit (1) zur Befestigung an dem Rohr des Zugdeichsel-Stützrades U-förmig so ausgebildet ist, daß sie reibschlüssig auf das Rohr des Zugdeichsel-Stützrades aufsteckbar ist.

3. Vorrichtung nach Anspruch 2, dadurch gekennzeichnet, daß die U-Form der ersten Seilumlenkeinheit (1) leicht hinterschnitten und diese elastisch verformbar ist.

4. Vorrichtung nach Anspruch 2 oder 3, dadurch gekennzeichnet, daß die erste Seilumlenkeinheit (1) ein U-förmiges Gehäuse (5) mit mindestens einer Seilumlenkrolle (6, 7, 8) umfaßt.

5. Vorrichtung nach einem der Ansprüche 2 bis 4, dadurch gekennzeichnet, daß die erste Seilumlenkeinheit (1) mindestens eine Gleitführung für das Seil (3) umfaßt.

6. Vorrichtung nach einem der vorhergehenden Ansprüche, dadurch gekennzeichnet, daß die zweite Seilumlenkeinheit (2) einen Haken (9) zur Befestigung an der Anhängerkupplung des Kraftfahrzeugs aufweist.

7. Vorrichtung nach einem der vorhergehenden Ansprüche, dadurch gekennzeichnet, daß das andere (3a) der beiden Enden des Seiles (3) an einer der beiden Seilumlenkeinheiten (1, 2) lösbar befestigt ist.

8. Vorrichtung nach Anspruch 7, dadurch gekennzeichnet, daß das andere (3a) der beiden Enden des Seiles (3) bei der zweiten Seilumlenkeinheit (2) einhängbar ist.

9. Vorrichtung nach einem der vorhergehenden Ansprüche, dadurch gekennzeichnet, daß jede der beiden Seilumlenkeinheiten (1, 2) mindestens zwei Umlenkrollen (6, 7, 8, 10, 11) aufweist.

10. Vorrichtung nach Anspruch 9, dadurch gekennzeichnet, daß die zweite Seilumlenkeinheit (2) eine freistehende Umlenkrolle (10) aufweist.

11. Vorrichtung nach einem der vorhergehenden Ansprüche, dadurch gekennzeichnet, daß die erste Seilumlenkeinheit (1) zwei Paare von Umlenkrollen (6, 7, 8) aufweist.
